# FASCICULE DE BREVET EUROPEEN

(11) **EP 4 124 478 B1**
(45) Date de publication et mention de la délivrance du brevet: **21.05.2025**
(21) Numéro de dépôt: 22185775.8
(22) Date de dépôt: 19.07.2022
(51) Int. Cl.: B60G 7/00, B60T 5/00, F16D 65/847

(54) **BRAS OU TRIANGLE DE SUSPENSION ET PROCÉDÉ DE FABRICATION D'UN TEL BRAS OU TRIANGLE DE SUSPENSION**
LENKER ODER DREIECKSLENKER UND VERFAHREN ZUR HERSTELLUNG EINES SOLCHEN LENKERS ODER DREIECKSLENKERS
SUSPENSION ARM OR TRIANGULAR SUSPENSION ARM AND METHOD FOR MANUFACTURING SUCH A SUSPENSION ARM OR TRIANGULAR SUSPENSION ARM

(30) Priorité: 28.07.2021 FR 2108210
(43) Date de publication de la demande: 01.02.2023
(73) Titulaire: Renault s.a.s, 92100 Boulogne Billancourt (FR)
(72) Inventeur: EVRAT, Xavier, 78280 GUYANCOURT (FR); MATEOS, Laurent, 78280 GUYANCOURT (FR); ONILLON, Thibault, 78280 GUYANCOURT (FR)

(56) Documents cités:
- EP-A1- 3 141 408
- WO-A1-01/32979
- WO-A1-2018/093185
- DE-A1- 102011 052 175
- DE-A1- 102012 025 034
- DE-A1- 102014 205 603
- DE-A1- 102015 202 085
- DE-C1- 19 943 536
- US-A1- 2019 107 162
- US-A1- 2020 025 275
- AUDREY NUGUE: "POLY-SHAPE, leader de la fabrication additive", 30 June 2017 (2017-06-30), XP055464866, Retrieved from the Internet <URL:http://www.poly-shape.com/parutions/juin/Romain_Dumas.pdf> [retrieved on 20180405]

## Description

### DOMAINE TECHNIQUE DE L'INVENTION

La présente invention concerne de manière générale le domaine de l'automobile.

Elle concerne plus particulièrement un élément de support de suspension pour véhicule automobile, constitué par un bras ou un triangle de suspension, comportant un corps adapté à solidariser une roue à un châssis du véhicule automobile.

Elle concerne également un procédé de fabrication d'un tel élément de support de suspension.

### ETAT DE LA TECHNIQUE

Dans un train roulant de véhicule automobile, il est prévu deux roues chacune équipée d'un moyeu, d'un porte-moyeu (ou « porte-fusée ») qui autorise la rotation du moyeu, et d'au moins un élément de support de suspension qui connecte le porte-moyeu au châssis du véhicule et sur lequel est fixé un amortisseur.

Cet élément de support de suspension peut typiquement se présenter sous la forme d'un bras ou d'un triangle de suspension.

C'est une pièce qui est montée sur le côté du châssis, de manière à pouvoir pivoter autour d'un axe longitudinal du véhicule lorsque la suspension du véhicule se comprime ou se détend, et qui supporte à son extrémité le porte-moyeu.

Cette pièce est donc très sollicitée et a un rôle fondamental dans la tenue de route du véhicule.

Elle est généralement réalisée lors d'une opération de fonderie, en matière métallique, par exemple en alliage d'aluminium.

A côté de ce bras ou triangle de suspension, il est connu d'installer une écope qui permet de dévier une partie du flux d'air circulant sous la voiture vers le disque de frein de la roue correspondante, afin d'accélérer son refroidissement lorsque le véhicule avance.

Cette écope est généralement réalisée par moulage d'une matière plastique. Elle est ensuite vissée à l'un des éléments du train correspondant du véhicule.

On connaît par ailleurs du document US2019107162 un dispositif de suspension d'une roue de véhicule automobile. Ce dispositif comprend un porte-fusée relié à la structure du véhicule automobile au moyen d'un bras de suspension avant oscillant et d'un amortisseur avant. Il comprend également un disque de frein lié à la roue et un couvercle de disque de frein lié au porte-fusée. Ce couvercle vient de formation avec le porte-fusée M, grâce à une technologie de fabrication additive. Il est spécifié que le couvercle présente une pluralité d'ailettes et d'ouvertures disposées radialement pour dissiper la chaleur générée par le disque de frein.

On connaît également du document EP3141408, qui divulgue le préambule de la revendication 1, un bras de suspension dont la forme est conçue pour réduire la traînée aérodynamique, notamment pour les véhicules ayant une grande garde au sol. Ce bras de suspension présente une forme courbée et comporte un point de liaison côté roue et deux points de liaison côté caisse. Il porte sur son bord avant un dispositif de guidage d'air conçu de telle manière que l'air frappant le bras de suspension est guidé au-dessus et au-dessous de ce bras.

Les documents DE102012025034, WO01/32979, US2020/025275, DE102014205603, DE102011052175, DE19943536C1, WO2018/093185 divulguent des bras de suspension avec un appendice aérodynamique, et les documents US 2019/107162 et "POLY-SHAPE, leader de la fabrication additive", de Audrey Nugue, divulguent des écopes de refroidissement de freins.

### PRESENTATION DE L'INVENTION

La présente invention vise à simplifier l'architecture d'un train roulant de véhicule automobile et à l'alléger.

Plus particulièrement, on propose selon l'invention un élément de support de suspension tel que défini dans la revendication 1.

Par pièce monobloc, on entend que ces deux composants viennent de formation d'une seule pièce, en ce sens qu'ils sont issus d'un seul et unique process de fabrication. Ils sont donc dépourvus de moyens de fixation l'un à l'autre. Ils sont inséparables (sauf à les casser). Il n'est ainsi plus nécessaire d'avoir à assembler ces deux composants, ce qui permet de réduire le poids du train roulant du véhicule et de faciliter son assemblage.

En outre, grâce à l'invention, le bras ou triangle de suspension peut assurer simultanément plusieurs fonctions, dont une fonction mécanique qui consiste à relier la roue au châssis et une fonction aérodynamique qui consiste par exemple à dévier l'air en direction du système de freinage du véhicule.

Enfin, l'appendice aérodynamique, qui remplit la seconde de ces fonctions, permet de participer à la raideur du corps, si bien qu'il est possible d'alléger ce dernier en conséquence.

Selon l'invention, ledit au moins un appendice aérodynamique comporte un déflecteur d'air constitué par une écope de refroidissement pour un système de freinage du véhicule automobile, et au moins une paroi qui est sensiblement plane, qui présente au moins une ouverture et qui est située dans un plan sensiblement parallèle au plan moyen du corps.

D'autres caractéristiques avantageuses et non limitatives de l'élément de support de suspension conforme à l'invention, prises individuellement ou selon toutes les combinaisons techniquement possibles, sont les suivantes :
- ledit au moins un appendice aérodynamique est formé par une plaque d'épaisseur inférieure à 3 millimètres ;
- ledit corps et chaque appendice aérodynamique sont formés par fabrication additive ;
- ledit corps et chaque appendice aérodynamique sont formés dans le même matériau ;
- ladite au moins une paroi présente au moins une ouverture.

L'invention concerne aussi un procédé de fabrication tel que défini dans la revendication 4.

D'autres caractéristiques avantageuses et non limitatives du procédé de fabrication conforme à l'invention, prises individuellement ou selon toutes les combinaisons techniquement possibles, sont les suivantes :
- ledit corps et chaque appendice aérodynamique sont formés par fabrication additive ;
- ledit corps s'étendant dans un plan moyen, lors de l'opération de formation, le plan moyen dudit corps est incliné par rapport à la verticale d'un angle inférieur à 30 degrés, de préférence inférieur à 10 degrés ;
- lors de l'opération de formation, des supports qui supporte ledit corps sont simultanément formés avec ledit corps et après l'opération de formation, il est prévu une opération de finition au cours de laquelle les supports sont coupés dudit corps.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique d'une partie d'un train roulant avant de véhicule automobile ;
[Fig. 2] est une vue schématique, sous un premier angle, d'un triangle de suspension conforme à l'invention du train roulant de la figure 1 ;
[Fig. 3] est une vue schématique, sous un deuxième angle, du triangle de suspension de la figure 2 ; et
[Fig. 4] est une vue schématique, sous un troisième angle, du triangle de suspension de la figure 2.

Dans la suite de la description, on considérera que le véhicule automobile est situé sur une route horizontale. Les termes supérieur et inférieur seront alors utilisés par rapport à cette configuration. Les termes avant et arrière seront également utilisés par rapport au véhicule, l'avant désigné le côté tourné vers le devant du véhicule et l'arrière désignant le côté opposé.

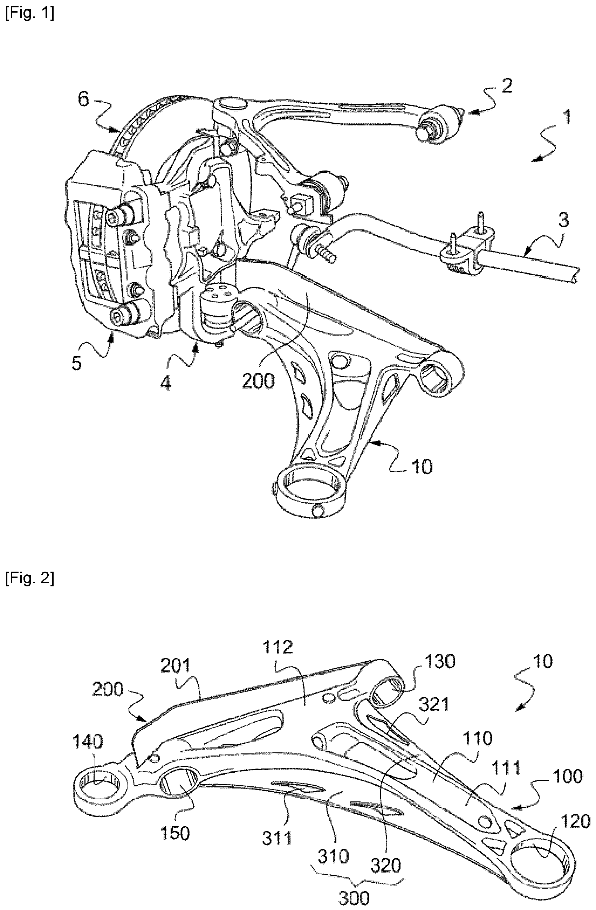

Sur la figure 1, on a représenté, en perspective vue de l'arrière, une partie gauche d'un train avant 1 de véhicule automobile, ici de voiture.

Cette partie gauche du train avant 1 comporte une roue et son moyeu, ainsi qu'un amortisseur, lesquels éléments ne sont pas représentés pour la clarté des figures.

Elle comporte également un système de freinage comportant un disque de frein 6 fixé à la roue et un étrier de frein 5.

L'étrier de frein 5 est fixé sur un porte-moyeu 4.

Ce porte-moyeu 4 permet donc de supporter l'étrier de frein 5 mais aussi le moyeu de la roue correspondante de telle sorte que la roue puisse pivoter par rapport à ce porte-moyeu 4.

Le porte-moyeu 4 est pour sa part articulé sur au moins un élément de support de suspension.

Ici, il est articulé, en partie basse, sur un triangle de suspension 10 inférieur et, en partie haute, sur un triangle de suspension 2 supérieur. Cette configuration en triangles superposés n'est qu'un exemple illustratif en ce sens qu'une configuration employant un unique triangle de suspension par roue pourrait aussi être employé.

Les articulations du porte-moyeu 4 sur les deux triangles de suspension permettent à ce porte-moyeu de pivoter autour d'un axe sensiblement vertical pour diriger le véhicule dans la direction souhaitée.

Le triangle de suspension 2 supérieur présente une forme en V, avec deux extrémités articulées sur le châssis du véhicule de façon que le triangle puisse basculer par rapport au châssis autour d'un axe sensiblement horizontal, ce qui permet à la roue de monter par rapport au châssis lorsque la suspension est comprimée ou de descendre lorsque la suspension se détend.

Ce triangle de suspension 2 supérieur est en outre monté, au niveau du fond du V, sur le porte-moyeu 4 à l'aide d'une rotule.

Le triangle de suspension 10 inférieur est plus précisément représenté sur les figures 2 à 4. C'est celui-ci qui fait ici plus précisément l'objet de la présente invention décrite ci-après.

Sur la figure 1, on observe une barre anti-roulis 3 qui est connecté à ce triangle de suspension 10.

Ici, l'amortisseur non représenté est lui aussi connecté à ce triangle de suspension 10, au même niveau que la barre anti-roulis 3.

Ce triangle de suspension 10 est prévu pour être installé sensiblement horizontalement dans le véhicule.

Comme le montre la figure 2, il comporte tout d'abord un corps 100 qui assure la fonction de liaison du morte-moyeu 4 au châssis du véhicule.

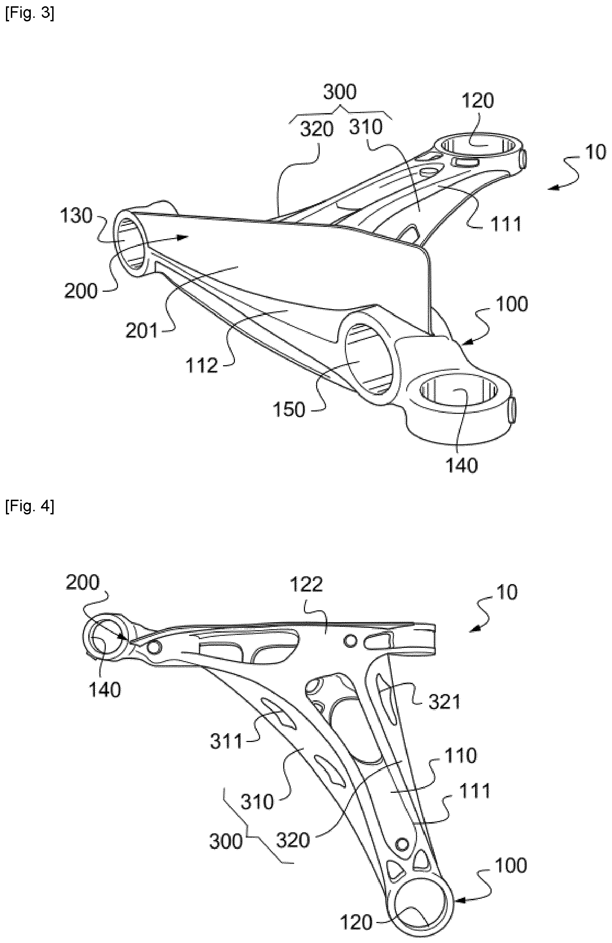

Comme le montre bien la figure 4, le corps 100 comporte un bras 110 en forme de T incliné.

Ce bras 110 comporte plus précisément une première partie 111 (le pied du T) qui s'étend de façon sensiblement rectiligne, et une seconde partie (le chapeau du T) qui s'étend aussi de façon sensiblement rectiligne. Ces deux parties 111, 112 sont ici inclinées l'une par rapport à l'autre d'un angle d'environ 60 degrés. Cette forme du bras 110 n'est bien entendu qu'un exemple non limitatif.

Le bras 110 pourrait être plein. Toutefois, comme le montre bien les figures, il présente plusieurs ouvertures qui permettent de l'alléger sans pour autant nuire à ses caractéristiques structurelles. Il est en outre creux en ce sens qu'il délimite des cavités intérieures (non visibles) qui permettent également de l'alléger.

Le corps 100 est conçu pour accueillir des liaisons permettant son assujettissement, d'un côté, au châssis, et, de l'autre, au porte-moyeu 4.

Ici, il est prévu que le corps 100 puisse accueillir un moyen de liaison de type rotule (avec trois degrés de liberté en rotation) pour sa fixation au porte-moyeu 4, et exactement deux moyens de liaison de type rotule pour sa fixation au châssis.

Ces moyens de liaison peuvent se présenter sous des formes variées. Il peut par exemple s'agir de rotules métalliques vissées ou serties dans le corps 100, ou de bagues en caoutchouc (plus communément désignés par l'appellation anglaise « bushings »).

En pratique, ici, le corps 100 comporte, à l'extrémité libre de la première partie 111 du bras 110, une première douille 120 en forme d'oeillet dans laquelle peut être emmanché en force une bague en caoutchouc.

Il comporte en outre, à une extrémité de la seconde partie 112 du bras 110, une seconde douille 130 en forme de tube dans laquelle peut être emmanchée en force une autre bague en caoutchouc.

Les deux bagues en caoutchouc permettent de connecter le triangle de suspension 10 au châssis du véhicule, de façon que le bras 110 puisse pivoter autour d'un axe longitudinal du véhicule lorsque l'amortisseur se comprime ou se détend.

Le corps 100 comporte également, à l'autre extrémité de la seconde partie 112 du bras 110, une troisième douille 140 en forme d'oeillet dans laquelle peut être vissée une rotule métallique (pour sa solidarisation au porte-moyeu 4).

Il comporte enfin, au sein même du bras 110 et à proximité de cette troisième douille 140, une quatrième douille 150 tubulaire sur laquelle peut s'articuler une extrémité de l'amortisseur.

Le corps 100 présente une face supérieure et, à l'opposé, une face inférieure destinée à être tournée du côté de la route.

Comme le montrent bien les figures 2 et 3, le triangle de suspension 10 comporte en outre au moins un appendice aérodynamique 200, 300. Ici, il en comporte plusieurs.

L'un de ces appendices aérodynamiques est un déflecteur. Il s'agit plus précisément ici d'une écope de refroidissement de frein, ci-après appelée écope 200, qui a pour fonction de favoriser le refroidissement du système de freinage lorsque le véhicule avance.

L'autre de ces appendices aérodynamiques est un écran aérodynamique 300 qui a pour fonction de réduire la trainée engendrée par le triangle de suspension lorsque le véhicule avance.

L'écope 200 se présente sous la forme d'une paroi faisant face au flux d'air passant sous le véhicule lorsque ce dernier avance.

Elle présente ainsi une face 201 orientée vers l'avant du véhicule. Cette face présente une surface qui est de préférence continue. Elle est ici sensiblement plane, à l'exception de son extrémité tournée vers la roue qui est légèrement incurvée vers l'arrière de façon à pouvoir guider le flux d'air dévié vers la zone souhaitée du système de freinage.

Ici, et de manière préférentielle, l'écope 200 se présente sous la forme d'une plaque qui présente une épaisseur en tout point inférieure à 2 mm, ici sensiblement égale à 1 mm.

Cette écope 200 s'élève à partir de la face supérieure de la seconde partie 112 du bras 110 du corps 100. Elle s'élève selon une direction orthogonale au plan moyen du bras 110.

Cette écope 200 longe ici le bord avant de la seconde partie 112 du bras 110 du corps 100, entre les deux douilles 130, 140. Elle présente une hauteur qui augmente depuis la seconde douille 130 vers la troisième douille 140.

Selon l'invention, l'écope 200 est formée d'une seule pièce avec le corps 100.

Elle est réalisée dans la même matière que celui-ci, à savoir ici en alliage d'aluminium.

L'écran aérodynamique 300 a pour fonction de restreindre la trainée engendrée par le triangle de suspension 10 lorsque le véhicule avance.

Il pourrait se présenter sous la forme d'une grande plaque située sous le corps 100.

Toutefois, ici, il comporte deux parois 310, 320 distinctes, situées de part et d'autre du bras 110 du corps 100.

Ces deux parois 310, 320 sont plus précisément prévues de part et d'autre de la première partie 111 du bras 110 (le pied du T), et s'étendent depuis la première douille 1120 jusqu'aux extrémités de la seconde partie 112 du bras 110.

Il s'agit ici de plaques planes d'épaisseurs inférieures à 2 mm, ici environ égales à 1 mm.

Ces deux parois 310, 320 sont sensiblement planes et s'étendent parallèlement au plan moyen du corps 100. Elles s'étendent plus précisément au niveau de la face inférieure du bras 110.

Elles peuvent être qualifiées de déflecteur d'air en ce sens qu'elles sont ajourées. Elles possèdent en effet respectivement une et deux ouvertures 311, 321, dont les formes dissymétriques permettent de dévier l'air qui passe sous le véhicule dans la direction souhaitée, par exemple vers le système de frein, ou vers le passage de roue avant gauche du véhicule, ou dans une direction permettant d'offrir un meilleur appui aérodynamique au véhicule automobile.

Le triangle de suspension 10 est ici réalisé en deux opérations successives.

La première opération consiste à fabriquer ce triangle par un processus additif, en utilisant un appareil communément appelé imprimante 3D.

Ici, le processus utilisé est celui de fusion sur lit de poudre au moyen de laser (typiquement, il peut s'agir de la méthode DMLS de l'anglais « Direct Metal Laser Sintering »), mais d'autres technologies pourraient être employées.

Le triangle est donc réalisé couche par couche, en disposant une nouvelle couche de poudre sur la dernière couche fusionnée par laser.

Le triangle de suspension est donc réalisé selon une direction d'extrusion orthogonale aux couches. Cette direction est de préférence sensiblement orthogonale au plan moyen du triangle de suspension. De ce fait, le triangle peut être réalisé rapidement, en évitant toute déformation qui serait due à une position en porte-à-faux de la pièce en cours de fabrication. Cela permet en outre de simultanément réaliser les deux triangles de suspension 10 inférieurs du train avant d'un véhicule, côte-à-côte, avec une imprimante 3D de dimensions restreintes.

Lors de cette étape, le corps 100 est formé en même temps que les déflecteurs 200, 300.

Il est en outre formé conjointement avec un support.

Ce support permet de former un appui pour le corps 100 sur le plateau de l'imprimante 3D. Ce support est donc formé d'une seule pièce avec le triangle de suspension 10 lui-même.

Dès lors, une fois la fabrication du triangle achevée, il est nécessaire de retirer le support du triangle.

Pour cela, il est prévu ici une opération de finition au cours de laquelle le support est découpé du corps 100 au moyen d'une scie industrielle, puis au cours de laquelle la pièce brute découpée est gravillonnée pour conférer au triangle de suspension 10 un état de surface adéquat.

Les douilles peuvent ensuite être alésées pour permettre un bon ajustement des moyens de liaisons et notamment des rotules.

Bien entendu, le train avant droit du véhicule sera préférentiellement équipé d'un triangle de suspension du même type que celui décrit ci-dessus.

On pourrait aussi prévoir que les triangles de suspension du train roulant arrière du véhicule soient également du même type, et qu'ils comportent ainsi au moins un appendice aérodynamique venant de formation avec le corps de ce triangle.

La présente invention n'est nullement limitée au mode de réalisation décrit et représenté, mais l'homme du métier saura y apporter toute variante conforme à l'invention.

Ainsi, on pourrait prévoir que le triangle de suspension 2 supérieur soit équipé d'un appendice aérodynamique et que ces deux éléments soient formés par un processus additif.

Dans une autre variante non revendiquée, on pourrait prévoir que les parois formant l'écran aérodynamique ne soient pas ajourées afin de minimiser la trainée induite par les triangles de suspension.

L'invention s'applique également à un bras de suspension qui, contrairement à un triangle de suspension, comporte un seul point de fixation au châssis du véhicule.

## Revendications

1. Elément de support de suspension (10) pour véhicule automobile, constitué par un bras ou un triangle de suspension, comportant :
- un corps (100) adapté à solidariser une roue à un châssis du véhicule automobile, et
- au moins un appendice aérodynamique (200, 300) qui est adapté à modifier l'écoulement de l'air autour dudit corps (100) lorsque le véhicule automobile avance et qui forme une seule pièce monobloc avec ledit corps (100),
**caractérisé en ce que** ledit au moins un appendice aérodynamique (200, 300) comporte un déflecteur d'air constitué par une écope (200) de refroidissement pour un système de freinage du véhicule automobile, et au moins une paroi (310, 320) qui est sensiblement plane, qui présente au moins une ouverture (311, 321) et qui est située dans un plan sensiblement parallèle au plan moyen du corps (100).

2. Elément de support de suspension (10) selon la revendication précédente, dans lequel ledit au moins un appendice aérodynamique (200, 300) est formé par une plaque d'épaisseur inférieure à 3 millimètres.

3. Elément de support de suspension (10) selon l'une des revendications précédentes, dans lequel ledit corps (100) et chaque appendice aérodynamique (200, 300) sont formés par fabrication additive, de préférence dans le même matériau.

4. Procédé de fabrication d'un élément de support de suspension (10) pour véhicule automobile, constitué par un bras ou un triangle de suspension conforme à l'une des revendications précédentes, ledit procédé étant **caractérisé en ce qu'**il comporte une opération de formation simultanée dudit corps (100) et de chaque appendice aérodynamique (200, 300).

5. Procédé de fabrication selon la revendication précédente, dans lequel ledit corps (100) et chaque appendice aérodynamique (200, 300) sont formés par fabrication additive.

6. Procédé de fabrication selon la revendication précédente, dans lequel ledit corps (100) s'étendant dans un plan moyen, lors de l'opération de formation, le plan moyen dudit corps (100) est incliné par rapport à la verticale d'un angle inférieur à 30 degrés.

7. Procédé de fabrication selon l'une des deux revendications précédentes, dans lequel, lors de l'opération de formation, des supports qui supporte ledit corps (100) sont simultanément formés avec ledit corps (100) et dans lequel, après l'opération de formation, il est prévu une opération de finition au cours de laquelle les supports sont coupés dudit corps (100).

## Patentansprüche

1. Aufhängungsträgerelement (10) für ein Kraftfahrzeug, das aus einem Lenker oder einem Dreieckslenker besteht, umfassend:
- einen Körper (100), der dazu angepasst ist, ein Rad an einer Karosserie des Kraftfahrzeugs zu befestigen, und
- mindestens einen aerodynamischen Fortsatz (200, 300), der dazu angepasst ist, die Strömung der Luft um den Körper herum (100) zu verändern, wenn sich das Kraftfahrzeug fortbewegt, und der ein einziges einstückiges Teil mit dem Körper (100) bildet,
**dadurch gekennzeichnet, dass** der mindestens eine aerodynamische Fortsatz (200, 300) einen Luftabweiser umfasst, der aus einem Kühlleitblech (200) für ein Bremssystem des Kraftfahrzeugs besteht, und mindestens eine Wand (310, 320), die im Wesentliche plan ist, die mindestens eine Öffnung (311, 321) aufweist und die in einer im Wesentlichen parallel zu der Mittelebene des Körpers (100) verlaufenden Ebene gelegen ist.

2. Aufhängungsträgerelement (10) nach dem vorhergehenden Anspruch, wobei der mindestens eine aerodynamische Fortsatz (200, 300) durch eine Platte mit einer Dicke von weniger als 3 Millimetern gebildet wird.

3. Aufhängungsträgerelement (10) nach einem der vorhergehenden Ansprüche, wobei der Körper (100) und jeder aerodynamische Fortsatz (200, 300) durch generative Fertigung, bevorzugt aus demselben Material, gebildet werden.

4. Verfahren zur Herstellung eines Aufhängungsträgerelements (10) für ein Kraftfahrzeug, das aus einem Lenker oder einem Dreieckslenker besteht, nach einem der vorhergehenden Ansprüche, wobei das Verfahren **dadurch gekennzeichnet ist, dass** es einen Vorgang des gleichzeitigen Bildens des Körpers (100) und jedes aerodynamischen Fortsatzes (200, 300) umfasst.

5. Verfahren zur Herstellung nach dem vorhergehenden Anspruch, wobei der Körper (100) und jeder aerodynamische Fortsatz (200, 300) durch generative Fertigung gebildet werden.

6. Verfahren zur Herstellung nach dem vorhergehenden Anspruch, wobei sich der Körper (100), bei dem Vorgang des Bildens, in einer Mittelebene erstreckt, wobei die Mittelebene des Körpers (100) in Bezug auf die Vertikale um einen Winkel von weniger als 30 Grad geneigt ist.

7. Verfahren zur Herstellung nach einem der beiden vorhergehenden Ansprüche, wobei, bei dem Vorgang des Bildens, Träger, die den Körper (100) tragen, gleichzeitig mit dem Körper (100) gebildet werden, und wobei, nach dem Vorgang des Bildens, ein Vorgang der Endbearbeitung vorgesehen ist, bei dem die Träger von dem Körper (100) abgetrennt werden.

## Claims

1. Suspension support element (10) for a motor vehicle, constituted by a suspension arm or wishbone, having:
- a body (100) designed to secure a wheel to a chassis of the motor vehicle, and
- at least one aerodynamic appendage (200, 300) that is designed to modify the flow of the air around said body (100) when the motor vehicle advances, and forms a single one-piece part with said body (100),
**characterized in that** said at least one aerodynamic appendage (200, 300) has an air deflector constituted by a cooling scoop (200) for a braking system of the motor vehicle, and at least one wall (310, 320) that is substantially flat, has at least one opening (311, 321) and is situated in a plane substantially parallel to the mean plane of the body (100).

2. Suspension support element (10) according to the preceding claim, wherein said at least one aerodynamic appendage (200, 300) is formed by a plate with a thickness of less than 3 millimetres.

3. Suspension support element (10) according to either of the preceding claims, wherein said body (100) and each aerodynamic appendage (200, 300) are formed by additive manufacturing, preferably from the same material.

4. Method for manufacturing a suspension support element (10) for a motor vehicle, constituted by a suspension arm or wishbone in accordance with one of the preceding claims, said method being **characterized in that** it involves an operation of simultaneously forming said body (100) and each aerodynamic appendage (200, 300).

5. Manufacturing method according to the preceding claim, wherein said body (100) and each aerodynamic appendage (200, 300) are formed by additive manufacturing.

6. Manufacturing method according to the preceding claim, wherein since said body (100) extends in a mean plane, during the forming operation, the mean plane of said body (100) is inclined with respect to the vertical by an angle of less than 30 degrees.

7. Manufacturing method according to one of the two preceding claims, wherein, during the forming operation, supports that support said body (100) are simultaneously formed with said body (100) and wherein, after the forming operation, a finishing operation is provided during which the supports are cut from said body (100).
